# EUROPÄISCHE PATENTSCHRIFT

(11) **EP 0 954 151 B1**
(45) Veröffentlichungstag und Bekanntmachung des Hinweises auf die Patenterteilung: **02.08.2006**
(21) Anmeldenummer: 98108028.6
(22) Anmeldetag: 02.05.1998
(51) Int. Cl.: H04M 1/72

(54) **Lokales Kommunikationsgerät**
Local communication apparatus
Dispositif de communication local

(43) Veröffentlichungstag der Anmeldung: 03.11.1999
(73) Patentinhaber: Micronas GmbH, 79108 Freiburg i. Br. (DE)
(72) Erfinder: Sieben, Ulrich, Dr. Dipl.-Phys., 79276 Reute (DE); Temerinac, Miodrag, Prof. Dr.-Ing., 79194 Gundelfingen (DE)
(74) Vertreter: Patentanwälte Westphal, Mussgnug & Partner

(56) Entgegenhaltungen:
- EP-A- 0 760 569
- WO-A-97/13332
- WO-A-98/10612
- WO-A-98/11707
- US-A- 5 465 401

## Beschreibung

Die Erfindung bettrifft ein Funktelefon gemäß den Merkmalen des Oberbegriffs des Anspruchs 1.

Ein solches Funktelefon ist aus US 5, 465, 401 bekannt.

Durch Verbreitung der neuen informationssystem, wie internet. E-Mail und Funktelefon, die im Wesentlichen auf einem seriellen Datenaustausch beruhen, wächst der Bedarf, die damit verknüpften informationsinhalte als Daten bei sich zu haben, auch wenn man unterwegs ist oder sich mit Bekannten oder Freunden trifft. Die Träger für diese Daten sollendaher leicht mitnehmbar sein und die darauf enthaltenen Daten sollen sich leicht austauschen, vervielfältigen und wiedergeben lassen. Ein solches Konzept ermöglicht neben den bekannten, öffentlich zugänglichen Kommunikationssystemen auf persönlicher Eberte gleichsam eine "gesellschaftiche Informationsverbreitung" (Social Broadcasting). Um diese wünschenswerten Eigenschaften zu realisieren, werden zu deren Lösung nach der Erfindung folgende technische Maßnahmen angegeben, vergleiche auch den Wortlaut des Anspruchs 1:
- kleine tragbare Geräte, die am besten in einem Funktelefon mitintagnert sind;
- ausreichende Speichertmpaiifäten:

- eine einheitliche DatenschnibteHe für die Aufnahme, den Austausch und die Weitergabe von Daten mit den verschiedensten Inhalten, wie Texte. Bilder, Dateien. Rechnerprogramme, Audio- oder Videosequenzen usw.;
- die Datenschnittstelle ist dabei durch eine einfache, drahtlose Schnittstelle mit einer eng begrenzten Reichweite realisiert:

- und schließlich eine einfache manuelle Bedienung des Gerätes.

Zusätzlich zur persönlichen lnformationsweitergabe kann ein solches Gerät, ähnlich wie eine Datendiskatte, auch als Datenträger dienen. Ferner erweitem geringfügige Ergänzungen das Gerät zu einer einfachen akustschen Wiedergabeeinrichtung für gespeicherte Audiodaten oder ermöglichen die optische Wiedergabe oder Darstellung von graphischen oder alphanumerischen Zeichen oder Zeichenfolgen auf einem Display oder gar die Wiedergabe von ganzen Videosequenzen.

Das Gerät nach der Erfindung betrifft somit ein Funktelefon mit integrierter Kommunikationsgaräte-Funktionseinheit für einen lokaten Datenaustausch über eine Funkschnittstelle, die jedoch im Gegensatz zu üblichen Funkschnittstellen nur eine sehr geringe Reichweite aufweist. Die Reichweite entspricht dabei maximal dem üblichen Gespächsabstand zwischen zwei sich unterhaltenden Personen, die auch nebeneinander oder einander gegenüber sitzen können. Ein Datenaustausch erfolgt somit nur in einem räumlich sehr begrenzten Rahmen. Die dabei übertragene Datenmenge kann jedoch groß sein, wenn beispielsweise eine Musikaufnahme oder Videodaten übertragen werden. Um zu annehmbaren Übertragungszeiten zu kommen, müssen die für die Übertragung verwendeten Bitraten entsprechend hoch sein - mindestens 200 kBit/s, eher im Bereich von 20 MBit/s. Die verfügbaren Infrarotübertragungssysteme leisten dies nicht. Der lokale Datenaustausch ist eine Ergänzung der persönlichen Kommunikation. So wie man sich bei einem Zusammentreffen gegenseitig Fotographien, Bilder, Bücher, Disketten, persönliche Informationen usw. austauscht, ermöglicht die Erfindung nun auch noch den Datenaustausch. Es ist dabei gleichgültig, ob der Dateninhalt PC-Programme, PC-Dateien, Audio- oder Videodaten oder sonstige Informationen betrifft, weil alle Daten in einer einheitlichen digitalen Form in die Speichereinrichtung des Kommunikationsgerätes geschrieben und dadurch mitgenommen werden können. ln der Regel findet die Verarbeitung oder Wiedergabe dann an einem anderen Ort in Verbindung mit anderen Geräten statt. Das Kommunikationsgerät hat auch die Möglichkeit, mit anderen elektronischen Geräten, wie Rechner, Fernsehgerät, Musikanlage usw., über daran angepaßte Funkschnittstellen zu kommunizieren, um die im Kommunikationsgerät zwischengespeicherten Daten zu verarbeiten oder deren jeweiligen Inhalt wiederzugeben.

Die Datenmenge, die bei einer derartigen lokalen Übertragung anfallen kann, ist groß, so daß das Kommunikationsgerät mit einer großen Speichereinrichtung ausgerüstet sein muß. Die zunehmende Speicherdichte von Festkörperspeichern, gegebenenfalls in Verbindung mit mit bekannten Datenreduktionsverfahren, wie z.B. die MPEG-Standards, ermöglicht es bereits jetzt, daß ein Musikstück von ca. 60 Minuten Dauer ausgetauscht und zwischengespeichert werden kann. Ohne den mechanischen Antrieb für das Speichermedium ist eine flache oder kompakte Bauform etwa im Format eines Notizbuches möglich. Die übrigen elektronischen Funktionseinheiten nehmen gegenüber der Speichereinrichtung vergleichbar wenig Raum ein und dienen der Funkübertragung, die manuell über einige Tasten ausgelöst wird, und der Steuerung des gesamten Übertragungsvorganges. Natürlich ist auch eine Energieversorgungsquelle mit zugehöriger Versorgungsschaltung vorhanden. Das Kommunikationsgerät läßt sich somit kompakt zusammenbauen und kann ohne Beschwernis überall hin mitgenommen werden.

Ein großer Vorteil der geringen Reichweite ist, daß der Aufwand für die Ein-und-Ausgangsfunkschnittstelle und die zugehörige Antenne sehr gering ist. Die Sendeleistung kann dabei so klein gehalten werden, daß die strengen Funkvorschriften gegebenenfalls nicht beachtet werden müssen. Das Kommunikationsgerät kann, wie bereits erwähnt, zusätzlich zu seiner Eignung für den lokalen Datenaustausch, mit Wiedergabeeinrichtungen ausgerüstet sein, die mindestens eine einfache optische und/oder akustische Wiedergabe des empfangenen Dateninhalts ermöglichen, beispielsweise ein Hineinhören in das überspielte Musikstück. Ganz besonders vorteilhaft ist die bereits erwähnte Kombination eines derartigen Kommunikationsgerätes mit einem Funktelefon, weil dieses sowieso von vielen Besitzern überall hin mitgenommen wird. Wenn der ZF-Frequenzbereich aus dem Funktelefon, der einem relativ kleinen Frequenzbereich zwischen 25 MHz und 50 MHz entspricht, gegenwärtig meist im Bereich um die 40 MHz, auch für die Funkübertragung des lokalen Datenaustausches verwendet wird, enthält das Funktelefon bis auf den großen Datenspeicher viele Funktionseinheiten, die mitverwendet werden können. Die Übertragung der Daten über die Ein-und-Ausgangs-Funkschnittstelle erfolgt mit üblichen Verfahren der digitalen Modulationstechnik, wie GMSK, QPSK, CPM, QAM, OFDM oder CDMA. Bei der Übertragung können auch Verfahren zur Verschlüsselung und Fehlerkorrektur angewendet werden.

Die Erfindung und vorteilhafte Ausgestaltungen werden nun anhand der Figuren der Zeichnung näher erläutert:
Fig. 1 zeigt als Blockschaltbild die Funktionseinheiten eines Kommunikationsgerätes mit zwei Wiedergabeeinrichtungen,
Fig. 2 zeigt schematisch einige Anwendungen für den lokalen Datenaustausch,
Fig. 3 zeigt als Blockschaltbild die Kombination eines Kommunikationsgerätes mit einem Funktelefon und
Fig. 4 zeigt schematisch im Zeitdiagramm ein Beispiel für einen lokalen Datenaustausch.

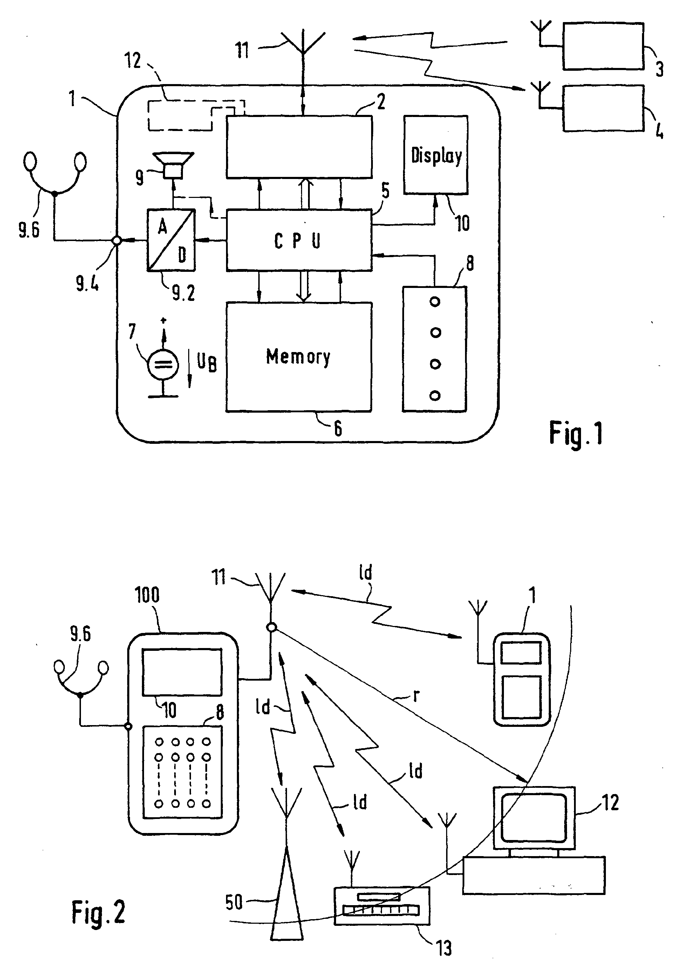

In Fig. 1 sind die wesentlichen Funktionseinheiten eines Kommunikationsgerätes 1 als Blockschaltbild zusammengestellt. Das Blockschaltbild enthält ferner als vorteilhafte Weiterbildungen eine akustische und eine optische Wiedergabeeinrichtung 9 bzw. 10. Für den lokalen Datenaustausch empfängt eine Ein-und-Ausgangsfunkschnittstelle 2 über eine externe Antenne 11 oder eine interne Antenne 12 Daten aus einer benachbarten Sendeeinrichtung 3 oder sendet Daten an eine benachbarte Empfangseinrichtung 4, die in Fig. 1 schematisch als separate Schaltungsblöcke dargestellt sind. Die Steuerung des lokalen Datenaustausches erfolgt durch eine Steuerein richtung, z.B. einem entsprechend programmierten Mikroprozessor, der auch der Datenverarbeitung dient somit die wesentliche Datenverarbeitungseinrichtung 5 in dem Kommunikationsgerät 1 darstellt, die gegebenenfalls in die Ein-und-Ausgangsfunkschnittstelle 2 mitintegriert ist. Den meisten Platz nimmt im Kommunikationsgerät 1 eine Speichereinrichtung 6 ein, die über Lese-, Schreib- und Steuerleitungen mit der Datenverarbeitungseinrichtung 5 verbunden ist. Hierfür eignen sich adressierbare Festkörperspeichereinrichtungen. Da das Kommunikationsgerät 1 eine autonome Spannungsversorgung 7 enthält, vereinfachen sich die Betriebsbedingen für die Speichereinrichtungen 6. Die manuelle Steuerung des Kommunikationsgerätes 1 erfolgt über wenige Bedienungsknöpfe oder Tasten, die schematisch als ein Tastenfeld 8 dargestellt sind. Die manuelle Tastenfunktionen steuern die Sendebereitschaft, die Empfangsbereitschaft und/oder Hilfsfunktionen, wie Adressen-, Index- oder Verschlüsselungseingaben.

Um ausgetauschte Audiodaten hörbar zu machen, enthält das Kommunikationsgerät 1 vorteilhafterweise auch die einfache Wiedergabeeinrichtung 9, die entweder direkt von der Datenverarbeitungseinrichtung 5 oder von einem Digital/Analog-Umsetzer 9.2 angesteuert wird. Wenn ein separater Audioausgang 9.4 für den Anschluß eines hochwertigeren Ohr- oder Kopfhörers 9.6 vorhanden ist, dann ist die interne Wiedergabeeinrichtung 9 abschaltbar.

Schließlich enthält das Kommunikationsgerät 1 von Fig. 1 noch die optische Anzeige- oder Wiedergabeeinrichtung 10, die der Anzeige von Betriebsdaten, wie Fehlermeldung usw., dient, die aber auch alphanummerische Zeichen, die mit den übertragenen Daten verkoppelt sind, anzeigt. Wenn die Speichereinrichtung 6 indiziert ist, dann ist über die Anzeige 10 das Index-Verzeichnis abrufbar und auch der belegte und/oder noch freie Speicherbereich.

In Fig. 2 sind schematisch einige Anwendungsmöglichkeiten für das Kommunikationsgerät 1 nach der Erfindung dargestellt, das wie erwähnt mit einem Funktelefon 100 kombiniert sein kann. Ein lokaler Datenaustausch ld kann zwischen zwei Kommunikationsgeräten 1 stattfinden, wobei eines oder beide auch entsprechend angepaßte Funktelefone 100 sein können. Der lokale Datenaustausch ist jedoch auch mit einem entsprechend ausgerüsteten Datenverarbeitungsgerät 12 oder Datenwiedergabegerät 13, z.B. ein CD-Spieler oder TV-Gerät, möglich. Die lokale Datenübertragung bezüglich eines Datenverarbeitungsgerätes 12 entspricht einem elektronischen Notzbuch, mit dem Daten und Programme aus einem anderen Datenverarbeitungsgerät, beispielsweise am Arbeitsplatz, über das Kommunikationsgerät 1 bzw. 100 mitgenommen werden können, um die weitere Bearbeitung zu Hause zu erledigen.

Schließlich enthält die schematische Darstellung Fig. 2 noch eine angepaßte Datenquelle 50, von der im Wesentlichen nur Daten gesendet werden. Denkbar ist hierbei, daß gerade die geringe Reichweite r der Ein-und-Ausgangsfunkschnittstelle 2 dazu verwendet wird, daß der Besitzer des tragbaren Kommunikationsgerätes 1, 100 relativ nahe an die Datenquelle 50 herangehen muß, um lokale Daten Id empfangen zu können. Diese räumliche Zuwendung in Verbindung mit einer "Belohnung" durch ein übertragenes Musikstück kann beispielsweise für Werbezwecke ausgenutzt werden.

Das letzte Anwendungsbeispiel zeigt, daß der lokale Datenaustausch nach der Erfindung neue und spezielle Möglichkeiten der Kommunikation ermöglicht, die ganz wesentlich mit der geringen Funkreichweite r verknüpft sind. Die Funkreichweite sollte keinesfalls mehr als 4 m überschreiten. Der typische Betriebsbereich dürfte zwischen 0 und 2 m liegen. Dies ist eigentlich ein Entfernungsbereich, der üblicherweise durch ein Kabel überbrückt wird. Durch die einfache Funkverbindung können die hierfür erforderlichen Steckkontakte und das Kabel eingespart werden, die lästig und immer störanfällig sind. Das Kommunikationsgerät 1 erfordert somit keinerlei Öffnungen oder Durchgänge im Gehäuse; eine Ausnahme stellt der gegebenenfalls vorhandene Kopfhöreranschluß 9.4 dar. Die externe Antenne 11 erfordert nur eine feste Antennendurchführung, die beispielsweise beim Funktelefon 100 sowieso vorhanden ist oder kann problemlos durch die interne Antenne 12 ersetzt werden, deren Wirkungsgrad wegen der geringen Reichweite nicht hoch sein muß. Die Steuerung der Ein-und-Ausgangsfunkschnittstelle 2 bezüglich der Funkreichweite r kann auch von der maximal zulässigen Bitfehlerrate in dem Sinne abhängig gemacht werden, daß die Sendeleistung so weit wie möglich manuell oder automatisch reduziert wird. Dies spart Batterieleistung ein und verhindert Störungen anderer elektronischer Einrichtungen.

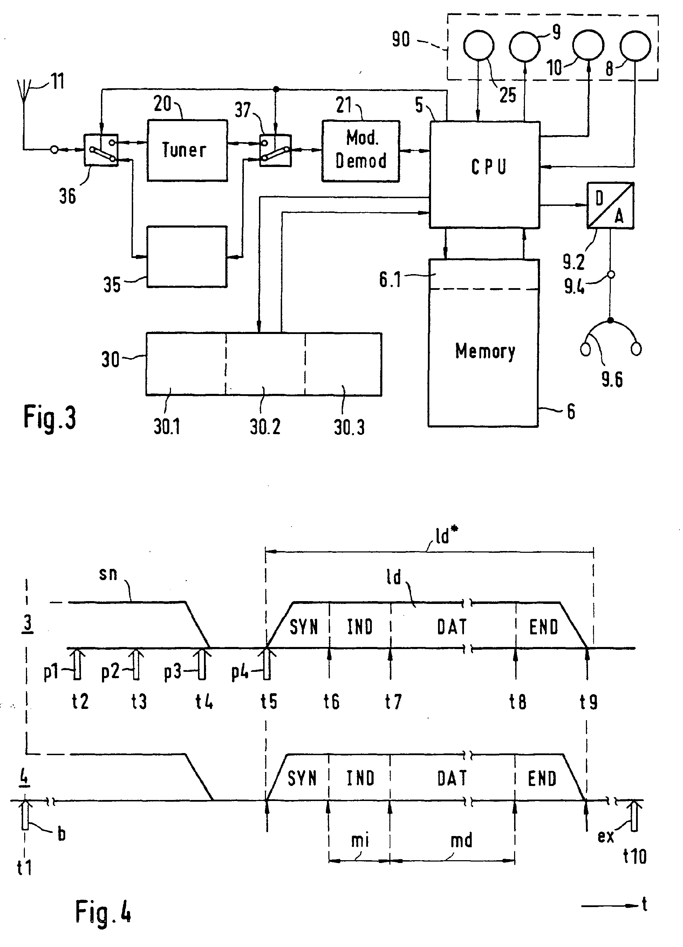

In Fig.3 sind schematisch die wesentlichen Funktionseinheiten dargestellt, die in einem für den lokalen Datenaustausch geeigneten Funktelefon 100 vorhanden sind. Die reine Funktelefonanwendung erfordert folgende Funktionseinheiten: eine externe Antenne 11, einen Funktelefontuner 20, eine Zwischenfrequenzverarbeitungseinrichtung 21 mit Modulator und Demodulator, eine Datenverarbeitungseinrichtung 5, für die in der Regel ein programmierbarer Mikroprozessor verwendet wird, eine mit der Datenverarbeitungseinrichtung 5 gekoppelte Speichereinrichtung 6.1, ein Programmspeicher 30, ein Tastenfeld 8, eine Anzeigeeinrichtung 10 und eine einfache akustische Wiedergabeeinrichtung 9. Für den lokalen Datenaustausch muß die Speichereinrichtung 6.1, die bei einem Handy etwa 1 MByte bis 4 MByte aufweist, mindestens um den Faktor 10 vergrößert werden. Der Programmspeicher 30 enthält eine Sektion 30.1 für die reine Telefonfunktion, eine Sektion 30.2 für den lokalen Datenaustausch und gegebenenfalls eine Sektion 30.3 für Wiedergabe- und Abspielfunktionen. Die Zwischenfrequenzverarbeitungseinrichtung 21, die beispielsweise einen Arbeitstakt von 40 MHz aufweist, kann unter Umgehung des Funktelefontuners 20 über eine Anpassungs-und-Filterschaltung 35 und die externe Antenne 11 direkt als Funksignalquelle den lokalen Datenaustausch bewirken. Beide Schaltungsblöcke 21, 35 entsprechen damit der Ein-und-Ausgangsfunkschnittstelle 2. Die Umgehung des Funktelefontuners 20 erfolgt durch zwei elektronische Umschalter 36 und 37, deren Steuereingänge von der Datenverarbeitungseinrichtung 5 gesteuert sind. Für eine hochwertige Audiowiedergabe mit einem angeschlossenen Kopf- oder Ohrhörer 9.6 ist wie in Fig. 1 ein Digital/Analog-Umsetzer 9.2 vorhanden, der von der Datenverarbeitungseinrichtung 5 gespeist ist. Die gegebenenfalls erforderliche Dekompression der MPEG-Daten erfolgt in der Datenverarbeitungseinrichtung 5 in Verbindung mit den gespeicherten Kompressionsfaktoren im Programmspeicher 30.3.

In Fig. 4 ist schließlich im Zeitdiagramm die Abwicklung eines lokalen Datenaustausches Id mittels der Übertragung eines Datenpakets ld* schematisch dargestellt. Die obere Zeile entspricht den Vorgängen auf der Senderseite 3 und die untere den Vorgängen auf der Empfängerseite 4. Als Fallbeispiel wird angenommen, daß sich zwei Personen treffen, die Daten austauschen wollen. Vereinfacht werden sie und die zugehörigen Kommunikationsgeräte als Senderseite 3 und Empfängerseite 4 bezeichnet. Nach gegenseitiger Absprache, daß lokale Daten ld ausgetauscht werden sollen, schaltet die Empfängerseite 4 zum Zeitpunkt t1 manuell mittels der Starteingabe b auf Empfangsbereitschaft. Die Empfängerseite 4 wartet nun auf den Empfang eines Synchronsignals SYN, das einer vorgegebene Datenfolge entspricht, die in einem Synchronisierbereich des übertragenen Datenpakets ld^{*} enthalten ist. Gemäß der Absprache ist etwa gleichzeitig auf der Senderseite 3 manuell der Sendevorgang ausgelöst worden. Er beginnt damit, daß das Kommunikationsgerät 1 auf der Senderseite 3 zunächst selbständig auf Empfang umschaltet und zum Zeitpunkt t2 mit einer ersten Prüfung p1 beginnt, um ein gegebenenfalls vorhandenes Störsignal sn festzustellen. Diese Prüfung wird nach kurzen Intervallen zu den Zeitpunkten t3 bis t5 (vergl. die Prüfungen p2 bis p4) so lange wiederholt, bis das Störsignal sn nicht mehr festzustellen ist, dies ist zum Zeitpunkt t5 der Fall. Hält die Störung längere Zeit an, dann wird der Sendeversuch unterbrochen und eine Störungsmeldung angezeigt. Nach einer persönlichen Absprache kann die lokale Datenübertragung dann an einer anderen Stelle versucht werden.

Wenn die Bedingungen für die Übertragung günstig sind, schaltet zum Zeitpunkt t5 die Senderseite 3 auf Senden um und sendet ein Datenpaket ld*, das mit dem Synchronsignal SYN beginnt (Zeitpunkte t5, t6), an den sich ein Steuerungsbereich IND anschließt (Zeitpunkte t6, t7), der Adressen-, Index-, Schlüssel- oder andere Informationen übergeordneter Art enthält. Der nächste Bereich DAT (Zeitpunkte t7, t8) des Datenpakets ld^{*} enthält den eigentlichen Datenbereich, der die lokal zu übertragenen Daten ld enthält. Den Abschluß bildet ein Endsignal END (Zeitpunkte t8, t9), dessen festgelegte Datenfolge auf der Empfängerseite 4 zum Zeitpunkt t9 die Datenspeicherung beendet. Da der Steuerungsbereich IND in der Regel Informationen enthält, die für die übertragenen Daten Id wichtig sind und die beispielsweise die Komprimierung betreffen, wird der Inhalt des Steuerungsbereiches IND oder ein Teil davon unabhängig von den übertragenen Daten Id gespeichert, vgl. die getrennten Speichervorgänge mi, md in Fig. 4.

Wenn die lokale Datenübertragung durch einen Prüfkode verbessert wird, dann ist es sinnvoll, daß auf der Empfängerseite 4 nach der Übertragung, also etwa zum Zeitpunkt t9, eine Bestätigungs- oder Fehleranzeige erfolgt. Bei einer fehlerhaften oder nicht mehr korrigierbaren Übertragung wird diese durch Absprache einfach nochmals wiederholt. Ein wichtiges Kriterium hierfür ist die maximal zulässige Bitfehlerrate, die wie bereits erwähnt gegebenenfalls auch zur Steuerung der Sendeleistung herangezogen wird. Nach erfolgreicher Datenübertragung erfolgt schließlich zum Zeitpunkt t10 auf der Empfängerseite 4 die manuelle Abschaltung ex der Empfangsbereitschaft.

Die Vorgänge auf der Senderseite 3 und Empfängerseite 4 laufen ähnlich ab, wenn eines der beiden Geräte ein angepaßtes Datenverarbeitungsgerät 12, ein Datenwiedergabegerät 13 oder eine angepaßte Datenquelle 50 ist. Eine nähere Beschreibung erübrigt sich dadurch.

## Patentansprüche

1. Funktelefon mit integrierter Kommunikationsgeräte-Funktionseinheit, mit einer Antenne (11), einem mit der Antenne (11) verbundenen Funktelefontuner (20), einer Zwischenfrequenzverarbeitungseinrichtung (21) mit Modulator und Demodulator, einer Datenverarbeitungseinrichtung (5), einer Speichereinrichtung (8, 6.1), einem Programmspeicher (30), einem Tastenfeld (8) und Wiedergabeeinrichtungen (9, 10), wobei die integrierte Kommunikationsgeräte-Funktionseinheit für einen lokalen Datenaustausch über eine Funkreichweite (r) von nicht mehr als 4 m ausgebildet ist, **dadurch gekennzeichnet, dass** Einrichtungen (36, 37) zur Umgehung das Funktelefontuners (20) vorgesehen sind und der Programmspeicher (30) eine erste Sektion (30.1) für reine Telefonfunktionen, eine zweite Sektion (30.2) für einen lokalen Datenaustausch über die Antenne (11) und eine dritte Sektion (30.3) für Wiedergabe- und Abspielfunktionen aufweist

2. Funktelefon nach Anspruch 1, **dadurch gekennzeichnet, daß** das Kommunikationsgerät zum lokalen Datenaustausch von Audiodaten, Textdaten, Videodaten, Rechnerprogramme, Rechner- oder sonstigen Dateien ausgebildet ist werden.

3. Funktelefon nach einem der Ansprüche 1 oder 2, **dadurch gekennzeichnet, daß** das Kommunikationsgerät eine Wiedergabeeinrichtung (10, 9) enthält zur mindestens teilweise sichtbaren und/oder hörbaren Wiedergabe des Inhaltes der ausgetauschten Daten (ld).

4. Funktelefon nach einem der Ansprüche 1 bis 3, **dadurch gekennzeichnet, daß** die ausgetauschten Daten (ld) mittels der Datenbearbeitungseinrichtung (5) auf der Senderseite (3) verschlüsselt und auf der Empfängerseite (4) entschlüsselt sind.

5. Funktelefon nach Anspruch 4, **dadurch gekennzeichnet, daß** ein Schlüssel auf der Sender- und Empfängerseite (3, 4) manuell eintragbar ist.

6. Funktelefon nach einem der Ansprüche 1 bis 5, **dadurch gekennzeichnet, daß** der Übertragungsbereich für den lokalen Datenaustausch mit der Zwischenfrequenz des Funktelefons (100) oder üblicher TV-Geräte übereinstimmt, die einen Teilbereich des Frequenzbereiches zwischen 25 MHz und 50 MHz umfaßt.

7. Funktelefon nach einem der Ansprüche 1 bis 6, **dadurch gekennzeichnet, daß** einige Funktionseinheiten (5, 11, 21, 30, 90) des Funktelefons für den lokalen Datenaustausch mitverwendet werden.

8. Funktelefon nach einem der Ansprüche 1 bis 7, **dadurch gekennzeichnet, daß** die Ein- und Ausgangsfunkschnittstelle (2) mit einer Fehlererkennungseinrichtung und/oder einer Fehlerkorrektureinrichtung in der Datenbearbeitungseinrichtung (5) verkoppelt ist.

9. Funktelefon nach einem der Ansprüche 1 bis 8, **dadurch gekennzeichnet daß** das Kommunikationsgerät ausgebildet ist, um die Reichweite beim Datenaustausch manuell oder durch ein entsprechendes Protokoll zwischen Sender- (3) und Empfängerseite (4) automatisch zu minimieren, wobei als Minimierungskriteriüm eine maximal-erlaubte Bitfehlerrate dient

## Claims

1. A radio telephone with an integrated functional unit for a communications device, having an antenna (11), a radio telephone tuner (20) connected to the antenna (11), an intermediate frequency processing device (21) with modulator and demodulator, a data processing unit (50), a memory unit (6, 6.1), a program memory (30), a keypad (8) and reproducing devices (9, 10), where the integrated functional unit of the communications device is constructed for local data exchange over a radio range (r) of not more than 4 metres,
**characterised in that** devices (36, 37) for bypassing the radio telephone tuner (20) are provided and the program memory (30) comprises a first section (30.1) for pure telephone functions, a second section (30.2) for a local data exchange via the antenna (11) and a third section (30.3) for reproducing and playback functions.

2. A radio telephone according to Claim 1,
**characterised in that** the communications device is constructed for the local data exchange of audio data, text data, video data, computer programs, computer or other data files.

3. A radio telephone according to one of Claims 1 or 2,
**characterised in that** the communications device contains a reproducing device (10, 9) for the at least to some extent visible and/or audible reproduction of the content of the exchanged data (1d).

4. A radio telephone according to one of Claims 1 to 3,
**characterised in that** the exchanged data (1d) are encrypted by means of the data processing unit (5) on the transmit side (3) and are decrypted on the receive side (4).

5. A radio telephone according to Claim 4,
**characterised in that** a cipher can be manually entered on the transmit and receive side (3, 4).

6. A radio telephone according to one of Claims 1 to 5,
**characterised in that** the transmission range for the local data exchange corresponds to the intermediate frequency of the radio telephone (100) or conventional TV sets, which comprises a sub-range of the frequency range between 25 MHz and 50 MHz.

7. A radio telephone according to one of Claims 1 to 6,
**characterised in that** a few functional units (5, 11, 21, 30, 90) of the radio telephone are also used for the local data exchange.

8. A radio telephone according to one of Claims 1 to 7,
**characterised in that** the input and output radio interface (2) is coupled to an error detection device and/or an error correction device in the data processing unit (5).

9. A radio telephone according to one of Claims 1 to 8,
**characterised in that** the communications device is constructed to minimise the range during data exchange manually or automatically by a corresponding protocol between the transmit side (3) and the receive side (4), whereby a maximum permissible bit error rate is used as the minimisation criterion.

## Revendications

1. Radiotéléphone avec unité fonctionnelle d'appareils de communication intégrée doté d'une antenne (11), d'un tuner (20) relié à l'antenne (11), d'un dispositif de traitement des fréquences intermédiaires (21) avec un modulateur et un démodulateur, d'un dispositif de traitement des données (5), d'un dispositif de mémoire (8, 6.1), d'une mémoire programme (30), d'un clavier (8) et de dispositifs de restitution (9, 10), l'unité fonctionnelle d'appareils de communication intégrée pour un échange local de données ne devant pas être conçue sur une portée (r) ne dépassant pas 4 mètres,
**caractérisé en ce que**
des dispositifs (36, 37) sont prévus pour contourner le tuner de radiotéléphone (20) et la mémoire programme (30) présente une première section (30.1) pour de pures fonctions de téléphone, une deuxième section (30.2) pour un échange local de données via l'antenne (11) et une troisième section (30.3) pour les fonctions de restitution et d'audition.

2. Radiotéléphone selon la revendication 1,
**caractérisé en ce que**
l'appareil de communication est conçu pour l'échange local de données de données audio, de données texte, de données vidéo, de programmes informatiques, de fichiers informatiques ou autres.

3. Radiotéléphone selon l'une quelconque des revendications 1 ou 2,
**caractérisé en ce que**
l'appareil de communication comprend un dispositif de restitution (10, 9) pour une restitution au moins partiellement visible et/ou audible du contenu des données échangées (Id).

4. Radiotéléphone selon l'une quelconque des revendications 1 à 3,
**caractérisé en ce que**
les données échangées (Id) sont codées sur le côté émetteur (3) à l'aide du dispositif de traitement des données (5) et décodées sur le côté récepteur (4).

5. Radiotéléphone selon la revendication 4,
**caractérisé en ce qu'**
un code peut être entré manuellement sur les côtés émetteur et récepteur (3, 4).

6. Radiotéléphone selon l'une quelconque des revendications 1 à 5,
**caractérisé en ce que**
la zone de transmission pour l'échange local de données coïncide avec la fréquence intermédiaire du radiotéléphone (100) ou des téléviseurs classiques qui comprend une plage partielle de la plage de fréquence comprise entre 25 MHz et 50 MHz.

7. Radiotéléphone selon l'une quelconque des revendications 1 à 5,
**caractérisé en ce que**
certaines unités fonctionnelles (5, 11, 21, 30, 90) du radiotéléphone sont utilisées en même temps pour l'échange local de données.

8. Radiotéléphone selon l'une quelconque des revendications 1 à 7,
**caractérisé en ce que**
l'interface radio d'entrée et de sortie (2) est couplée à un dispositif de détection des erreurs et/ou à un dispositif de correction des erreurs dans le dispositif de traitement des données (5).

9. Radiotéléphone selon l'une quelconque des revendications 1 à 8,
**caractérisé en ce que**
l'appareil de communication est conçu pour minimiser manuellement la portée lors de l'échange des données ou automatiquement par un protocole correspondant entre le côté émetteur (3) et le côté récepteur (4), un taux d'erreurs maximum autorisé sur les bits servant de critère de minimisation.
